# EUROPEAN PATENT APPLICATION

(11) **EP 4 644 141 A1**
(43) Date of publication of application: **05.11.2025**
(21) Application number: 23909930.2
(22) Date of filing: 30.11.2023
(51) Int. Cl.: B60G 17/015, B60G 17/056

(54) **VEHICLE SUSPENSION CONTROL SYSTEM**

(30) Priority: 29.12.2022 CN 202211710333
(71) Applicant: Shanghai Baolong Automotive Corporation, Songjiang District Shanghai 201620 (CN)
(72) Inventor: ZHANG, Liangxiu, Shanghai 201620 (CN); WANG, Shengquan, Shanghai 201620 (CN); WANG, Xianyong, Shanghai 201620 (CN); LI, Ling, Shanghai 201620 (CN); SUN, Haofan, Shanghai 201620 (CN); HUO, Fei, Shanghai 201620 (CN); LI, Pingyang, Shanghai 201620 (CN); YANG, Hang, Shanghai 201620 (CN); CHEN, Zhidong, Shanghai 201620 (CN)
(74) Representative: Hoffmann Eitle
(86) International application number: PCT/CN2023/135581
(87) International publication number: WO 2024/140000

(57) **Abstract**

The present invention provides a vehicle suspension control system, comprising: a controller, which provides a control signal; a shock absorber, comprising a hydraulic module and an electromagnetic valve, some or all oil supply passages of the hydraulic module passing through the electromagnetic valve; the electromagnetic valve comprises an electrical signal transmission assembly and an oil passage opening control assembly, the electrical signal transmission assembly of the electromagnetic valve adjusting the oil passage opening control assembly of the electromagnetic valve on the basis of the control signal, so as to control oil supply of the hydraulic module; an electromagnetic valve control and temperature sensing circuit, controlling operation of the electromagnetic valve, performing temperature sensing on the electrical signal transmission assembly of the electromagnetic valve, and transmitting a temperature sensing parameter to the controller; the controller is configured to send a corresponding control signal to terminate operation of the electromagnetic valve when it is detected that the temperature of the electrical signal transmission assembly of the electromagnetic valve exceeds a threshold. The present invention can perform timely and accurate monitoring of the temperature of an electromagnetic valve while performing a shock control operation on the electromagnetic valve of the shock absorber.

## Description

### Technical Field

The present application mainly relates to the technical fields of automotive field, and in particular to a vehicle suspension control system.

### Background

With the development of electric vehicles and the increasing intelligence, the vibration and noise of the whole vehicle are getting smaller and smaller, and vehicle users have more time to experience the driving feelings, therefore, the driving comfort and handling stability of the vehicle have become topics that needed attention. The suspension of the vehicle is an important component in realizing the shock absorption function of the vehicle. How to improve the functional adaptability of the suspension is a problem that needs to be solved.

### Summary

The technical problem to be solved by the present disclosure is to provide a vehicle suspension control system, realizing the stable and effective operation of the vehicle's shock absorption system and ensuring the vehicle's shock absorption performance.

In order to solve the above technical problems, the present application provides a vehicle suspension control system, comprising: a controller, providing a control signal; a shock absorber, including a hydraulic module and an electromagnetic valve, wherein, part or all of an oil supply passage of the hydraulic module passes through the electromagnetic valve; wherein the electromagnetic valve includes an electrical signal transmission assembly and an oil passage opening control assembly, and the electrical signal transmission assembly of the electromagnetic valve adjusts the oil passage opening control assembly of the electromagnetic valve based on the control signal, therefor controlling oil supply of the hydraulic module; an electromagnetic valve control and temperature sensing circuit, controlling an operation of the electromagnetic valve, sensing a temperature of the electrical signal transmission assembly of the electromagnetic valve, and transmitting temperature sensing parameters to the controller; wherein the controller is configured as: when detecting temperature of the electrical signal transmission assembly of the electromagnetic valve exceeding a first temperature threshold, sending a corresponding control signal to stop the operation of the electromagnetic valve.

In one embodiment of the present disclosure, the electromagnetic valve controlling and temperature sensing circuit including a switch circuit module, a current sensing module and a voltage sensing module; wherein the switch circuit module includes a first transistor and a second transistor, an electrical signal transmission assembly first end connecting to a connection point of the first transistor and the second transistor, the current sensing module including a first resistor connecting in series with the electrical signal transmission assembly, and the voltage sensing module including a resistor string formed by a second resistor and a third resistor, a resistor string first end and a resistor string second end are respectively connecting to the electrical signal transmission assembly first end and a first resistor second end; a connection point between the first resistor and the electrical signal transmission assembly connecting to the controller as a current parameter sensing point of the electrical signal transmission assembly, and a connection point between the second resistor and the third resistor connecting to the controller as a voltage parameter sensing point of the electrical signal transmission assembly; wherein, the controller is configured to obtain an equivalent resistance value of the electrical signal transmission assembly based on measurement values of the current parameter sensing point and the voltage parameter sensing point when the first transistor and the second transistor are respectively opening, and to obtain a temperature sensing value of the electrical signal transmission assembly based on converting the equivalent resistance value.

In one embodiment of the present disclosure, the switch circuit module turns on and off the first transistor and the second transistor based on a receiving control signal to control the operation of the electromagnetic valve.

In one embodiment of the present disclosure, the controller obtaining the equivalent resistance value of the electrical signal transmission assembly based on the measurement values of the current parameter sensing point and the voltage parameter sensing point when the first transistor and the second transistor are respectively opening comprises: obtaining a current value of the electrical signal transmission assembly based on a voltage measurement value of the current parameter sensing point and a resistance value of the first resistor; obtaining a voltage sum value of the electrical signal transmission assembly and the first resistor based on a voltage measurement value of the voltage parameter sensing point and a resistance ratio of the second resistor to the third resistor; obtaining a voltage value of the electrical signal transmission assembly according to the voltage sum value and the voltage measurement value of the current parameter sensing point; obtaining an equivalent resistance value of the electrical signal transmission assembly according to the voltage value of the electrical signal transmission assembly voltage value and the current value of the electrical signal transmission assembly.

In one embodiment of the present disclosure, obtaining the temperature sensing value of the electrical signal transmission assembly based on converting the equivalent resistance value comprises: converting to obtain the temperature sensing value of the electrical signal transmission assembly according to the equivalent resistance value and a resistance-temperature calibration curve of the electrical signal transmission assembly.

In one embodiment of the present disclosure, the electromagnetic valve control and temperature sensing circuit further includes a control signal driving module, and the control signal transmits to the switch circuit module via the control signal driving module.

In one embodiment of the present disclosure, the electromagnetic valve control and temperature sensing circuit further includes a signal amplification module, and the measurement values of the current parameter sensing point and the voltage parameter sensing point when the first transistor and the second transistor are respectively opening transmits to the controller through the signal amplification module.

In one embodiment of the present disclosure, the controller performs a filtering operation on the temperature sensing value.

In one embodiment of the present disclosure, a method of the filtering includes sliding average filtering.

In one embodiment of the present disclosure, a periphery of the shock absorber provides an air spring module, the air spring module providing a corresponding air pump and a gas distribution valve, wherein the air pump and the gas distribution valve control an air intake of the air spring module according to a control operation of the controller.

Compared with the prior art, the present invention has the following advantages: the technical solution of the present application, realizes timely and accurate monitoring of the temperature of the electromagnetic valve while performing shock absorption control operations on the electromagnetic valve of the shock absorber, so that when the operating temperature of the electromagnetic valve exceeds the set threshold, the electromagnetic valve stops running to avoid damage and oil leakage caused by the electromagnetic valve running at high temperature for a long time, thereby protecting the shock absorber and realizing intelligent control of the vehicle suspension.

### Brief Description of the Drawings

The accompanying drawings are provided for further understanding of the present application. They are included and constitute a part of the present application, the drawings illustrate embodiments of the present application and together with the present description to explain the principles of the present application. In the drawings:
Fig.1 is a schematic diagram of the composition of a vehicle suspension system according to an embodiment of the present application.
Fig.2A is a schematic diagram of the structure of an electromagnetic valve according to an embodiment of the present application.
Fig.2B is a schematic diagram of the structural details of an electromagnetic valve according to an embodiment of the present application.
Fig.3 is a schematic diagram of the structure of a shock absorber according to an embodiment of the present application.
Fig. 4A is a schematic diagram of the composition of the electromagnetic valve control and temperature sensing circuit of an embodiment of the present application.
Fig. 4B is a schematic diagram of a part of the current direction of the electromagnetic valve control and temperature sensing circuit of an embodiment of the present application.
Fig. 4C is a schematic diagram of a part of the current direction of the electromagnetic valve control and temperature sensing circuit of an embodiment of the present application.
Fig. 4D is a timing diagram of the control signal of the electromagnetic valve control and temperature sensing circuit of an embodiment of the present application and the current flowing through the electrical signal transmission assembly of the electromagnetic valve.
Fig. 5 is a schematic diagram of the module composition of the controller of an embodiment of the present application.
Fig. 6 is a schematic diagram of the process of the controller of an embodiment of the present application obtaining the equivalent resistance value of the electrical signal transmission assembly based on the received temperature sensing parameters.
Fig. 7 is a schematic diagram of the resistance-temperature calibration curve of an embodiment of the present application.

### Preferred Embodiment of the Present Disclosure

In order to illustrate the technical solutions in the embodiments of the present application more clearly, the drawings that need to be used in the description of the embodiments will be briefly introduced below. Obviously, the drawings in the following description are only some embodiments of the present application, and for those skilled in the art, other drawings can also be obtained based on these drawings without creative effort.

As indicated in this application and claims, the terms "a", "an", "a kind of" and/or "the" do not specifically refer to the singular and may include the plural unless the context clearly indicates an exception. Generally speaking, the terms "comprising" and "including" only suggest the inclusion of clearly identified steps and elements, and these steps and elements do not constitute an exclusive list, and the method or device may also contain other steps or elements.

The relative arrangements of components and steps, numerical expressions and numerical values set forth in these embodiments do not limit the scope of the present application unless specifically stated otherwise. At the same time, it should be understood that, for the convenience of description, the sizes of the various parts shown in the drawings are not drawn according to the actual proportional relationship.

In addition, it should be noted that the use of words such as "first" and "second" to define components is only for the convenience of distinguishing corresponding components, unless otherwise stated, the above words have no special meanings, and therefore cannot be construed as limiting the protection scope of the present application. In addition, although the terms used in this application are selected from well-known and commonly used terms, some terms mentioned in the specification of this application may be selected by the applicant according to his or her judgment, and their detailed meanings are listed in this article described in the relevant section of the description. Furthermore, it is required that this application be understood not only by the actual terms used, but also by the meaning implied by each term.

It will be understood that when an element is referred to as being "on," "connected to," "coupled to" or "in contacting with" another element, it can be directly on, connected to, coupled to, or in contact with the other element, or there may be an intervening component. In contrast, when an element is referred to as being "directly on," "directly connected to," "directly coupled to" or "directly in contacting with" another element, there are no intervening elements present. Likewise, when a first component is referred to as being "electrically contacting" or "electrically coupled to" a second component, there exists an electrical path between the first component and the second component that allows electrical current to flow. This electrical path may include capacitors, coupled inductors, and/or other components that allow current to flow, even without direct contact between conductive components.

The flow chart is used in this application to illustrate the operations performed by the system according to the embodiment of this application. It should be understood that the preceding or following operations are not necessarily performed in an exact order. Instead, various steps may be processed in reverse order or concurrently. At the same time, other operations can either add to these procedures, or a certain step or steps can be removed from these procedures.

The embodiment of the present application describes a vehicle suspension control system.

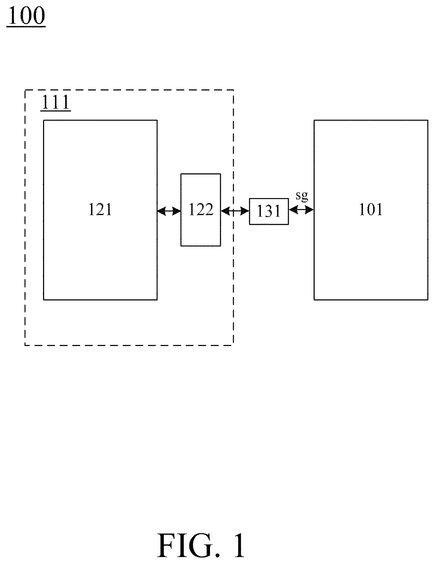

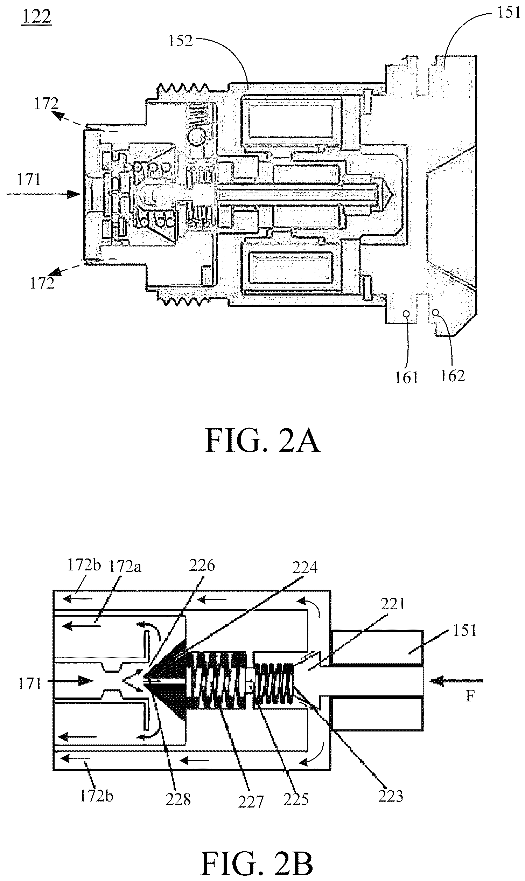

Fig.1 is a schematic diagram of the composition of a vehicle suspension system according to an embodiment of the present application. As shown in FIG. 1, a vehicle suspension control system 100 includes a controller 101 and a shock absorber 111. The shock absorber (CDC, Continuous Damping Control, continuous shock absorption control system or continuous damping control system) 111 includes a hydraulic module 121 and an electromagnetic valve 122. Fig.2A is a schematic diagram of the structure of an electromagnetic valve according to an embodiment of the present application. Fig.2B is a schematic diagram of the structural details of an electromagnetic valve according to an embodiment of the present application. Referring to Fig.1, Fig.2A and Fig.2B, the vehicle suspension control system 100 further includes an electromagnetic valve control and temperature sensing circui131. The controller 101 provides a control signal sg, and the electromagnetic valve control and temperature sensing circuit 131 controls the operation of the electromagnetic valve 122 based on the control signal sg. Part or all of the oil supply passage of the hydraulic module 121 passes through the electromagnetic valve 122. The electromagnetic valve 122 includes an electrical signal transmission component 151 and an oil circuit opening control component 152. The electrical signal transmission assembly 151 of the electromagnetic valve 122 generates an electromagnetic force F based on the control signal sg, and adjusts the oil circuit opening control assembly 152 of the electromagnetic valve 122 to control the oil supply amount of the hydraulic module 121. The oil supply amount of the hydraulic module 121 affects the damping force that the hydraulic module 121 can provide, thereby affecting the shock absorption performance of the vehicle suspension. Arrows 171 and 172 in Fig. 2A indicate the directions of the inlet oil paths and outlet oil paths, and leads 161 and 162 indicate the two connection terminals of the electrical signal transmission assembly 151 of the electromagnetic valve 122. In Fig. 2B, 221 is the primary valve core, 224 is the main valve core, 223 is the pilot spring, 227 is the main spring, 225 is the pilot throttle hole, 226 is the proportional throttle hole, 228 is the fixed throttle hole, 172a is the main oil channel, and 172b is the control oil channel.

The electromagnetic valve control and temperature sensing circuit 131 also senses the temperature of the electrical signal transmission assembly 151 of the electromagnetic valve 122, and transmits the temperature sensing parameters to the controller 101. The controller 101 is configured to send a corresponding control signal to stop the operation of the electromagnetic valve 122 when detecting that the temperature of the electrical signal transmission assembly 151 of the electromagnetic valve 122 exceeds a first temperature threshold.

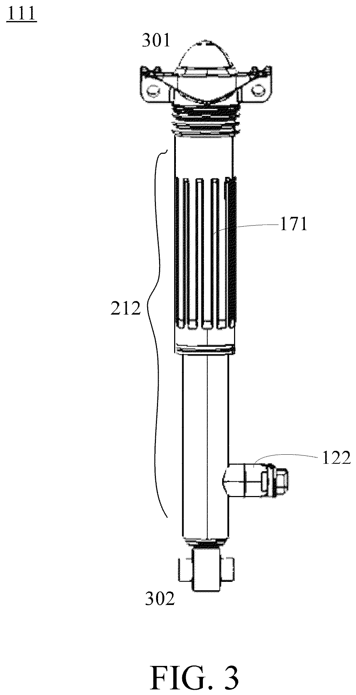

Fig. 3 is a schematic diagram of the structure of a shock absorber according to an embodiment of the present application. As shown in Fig. 3, the first end 301 and the second end 302 of the shock absorber 111 are respectively installed at the corresponding interfaces on the bottom of the vehicle body structure and the axle of the vehicle to form a shock absorbing structure (also referred to as a part of the vehicle suspension) between the vehicle body structure and the axle of the vehicle. The hydraulic module 121 is installed in the cylinder structure 212 of the shock absorber 111. The specific structure of the hydraulic module 121 is not shown in Fig. 3. The structure 171 is a dust cover. The periphery of the shock absorber 111 also provides an air spring module 181, the air spring module 181 is equipped with a corresponding air pump and a gas distribution valve. The air pump and the gas distribution valve control the air intake of the air spring module according to the control operation of the controller 101. The air spring module 181 is installed on the outer periphery of the cylinder structure 212. The cooperation between the air spring module 181 and the hydraulic module 121 of the shock absorber 111 achieves a better shock absorption effect.

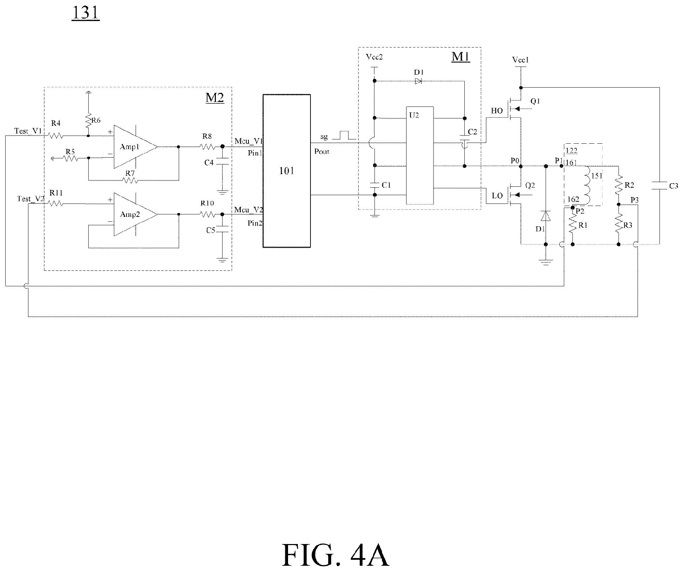

Fig. 4A is a schematic diagram of the composition of the electromagnetic valve control and temperature sensing circuit of an embodiment of the present application. Referring to Fig. 4A, the electromagnetic valve control and temperature sensing circuit 131 includes a switch circuit module, a current sensing module, and a voltage sensing module. The switch circuit module includes a first transistor Q1 and a second transistor Q2. The connection point P0 (more specifically the gate terminal HO and the gate terminal LO) of the first transistor Q1 and the second transistor Q2 receives the control signal sg. The first end of the electrical signal transmission component 151 is connected to the connection point P0 of the first transistor and the second transistor or the lead end P1 of the connection point P0. The switch circuit module turns on and off the first transistor Q1 and the second transistor Q2 based on the received control signal sg, so as to control the operation of the electromagnetic valve 122. The current sensing module includes a first resistor R1 connected in series with the electrical signal transmission assembly 151. The voltage sensing module includes a resistor string formed by a second resistor R2 and a third resistor R3. A first end and a second end of the resistor string are respectively connected to the first end 161 of the electrical signal transmission assembly 151 and the second end of the first resistor R1. The connection point P2 between the first resistor R1 and the electric signal transmission assembly 151 is connected to the controller 101 as a current parameter sensing point of the electric signal transmission assembly 151, and the connection point between the second resistor R2 and the third resistor R3 is connected to the controller 101 as a voltage parameter sensing point P3 of the electric signal transmission assembly 151 to transmit the temperature sensing parameter to the controller 101. The switch module can also be connected in parallel with a capacitor C3 to filter the power supply Vcc1 to achieve voltage stabilization.

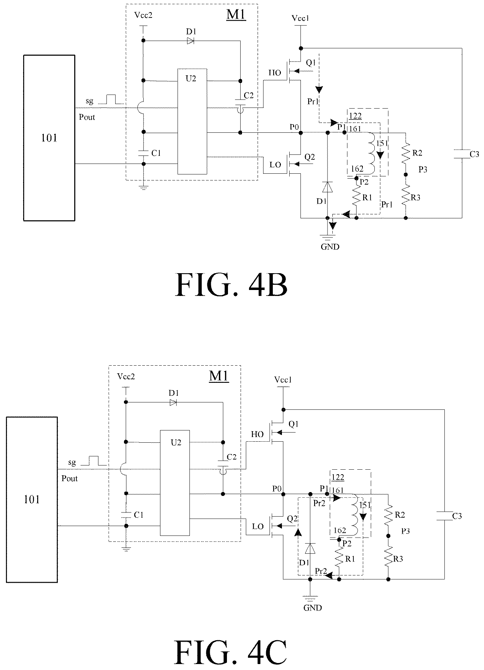

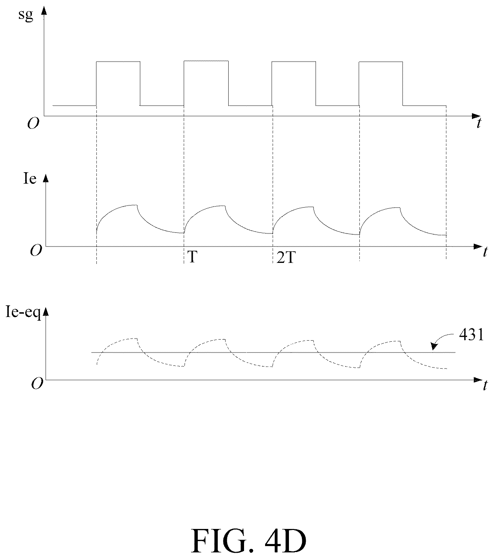

Fig. 4B is a schematic diagram of a part of the current direction of the electromagnetic valve control and temperature sensing circuit of an embodiment of the present application. Fig. 4C is a schematic diagram of a part of the current direction of the electromagnetic valve control and temperature sensing circuit of an embodiment of the present application. Referring to Fig. 4B, when the control signal sg drives the first transistor Q1 to turn on, the current direction Pr1 of the switch circuit module and the current sensing module is, starting from Vcc1, flowing through the first transistor Q1, passing through the electrical signal transmission assembly 151 of the electromagnetic valve 122, the first resistor R1 to the ground terminal GND. The current flow direction in the resistor string composed by the second resistor R2 and the third resistor R3 is the same as that of the resistor R1. Referring to 4C, when the control signal sg drives the second transistor Q2 to turn on (when the first transistor Q1 is turned off), the current direction Pr2 of the switch circuit module and the current sensing module is, starting from the electrical signal transmission assembly 151 of the electromagnetic valve 122, and continuing through the second transistor Q2. When the first transistor Q1 is turned off, the freewheeling diode D1 receives the freewheeling current, after the second transistor Q2 is turned on, the freewheeling current flows through the second transistor Q2, and the freewheeling diode D1 can still accelerate the current release and improve the current response speed. Fig. 4D is a timing diagram of the control signal of the electromagnetic valve control and temperature sensing circuit of an embodiment of the present application and the current flowing through the electrical signal transmission assembly of the electromagnetic valve. Referring to Fig.4D, as the high and low electrical levels of the control signal sg changes, the electrical signal transmission assembly 151 of the electromagnetic valve 122 also undergoes a charging and discharging process. The electrical signal transmission assembly 151 of the electromagnetic valve 122 includes, for example, an inductor element.

In some embodiments, referring to Fig. 4A, the electromagnetic valve control and temperature sensing circuit 131 further includes a control signal driving module M1 and a signal amplifying module M2. The control signal driving module M1 processes the control signal sg through driving chip U2, and then transmitting the control signal sg to the switch circuit module. The output terminal Pout of the controller 101 outputs a control signal sg, and the control signal sg includes, for example, a PWM (pulse width modulation) signal, by adjusting the duty cycle of the PWM signal of the electrical signal transmission assembly 151 that transmit to the electromagnetic valve 122, it achieves controlling the oil circuit opening of the oil circuit opening control component 152 of the electromagnetic valve 122. The control signal driving module M1 also includes peripheral components connected to the driving chip U2, including a diode D1, a capacitor C1 and a capacitor C2. When the controller 101 detects that the temperature of the electrical signal transmission assembly 151 of the electromagnetic valve 22 exceeds the first temperature threshold, issuing a corresponding control signal, such as a low electrical level signal, or a PWM signal with a duty cycle reduced to 0 to stop the operation of the electromagnetic valve.

The signal amplification module M2 includes, for example, a first amplifier module Amp1 and a second amplifier module Amp2. The first amplifier module Amp1 and the second amplifier module Amp2 respectively amplify the voltage measurement value Test_V1 of the current parameter sensing point P2 and the voltage measurement value Test_V2 of the voltage parameter sensing point P3 to form amplified signals Mcu_V1 and Mcu_V2, which are transmitted to the first input terminal Pin1 and the second input terminal Pin2 of the controller 101. The amplification factor of the first amplifier module Amp1 and the second amplifier module Amp2 can be set as needed, for example, 2 times, 5 times or 10 times, or equal value follower (i.e., the amplification factor is 1 time), to serve as a buffer stage circuit. The components connection methods of the positive input terminal, the negative input terminal and the output terminal of the first amplifier module Amp1 and the second amplifier module Amp2 also differ according to the different amplification factors.

The controller 101 is configured to obtain an equivalent resistance value of the electrical signal transmission assembly 151 based on the measurement values of the current parameter sensing point P2 and the voltage parameter sensing point P3 when the first transistor Q1 and the second transistor Q2 are turned on respectively, and to obtain a temperature sensing value of the electrical signal transmission assembly 151 based on the conversion of the equivalent resistance value.

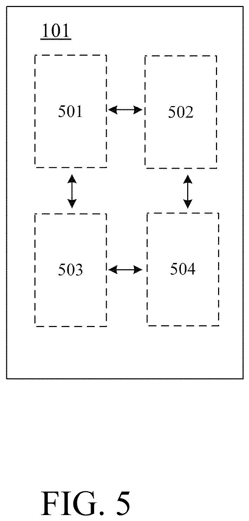

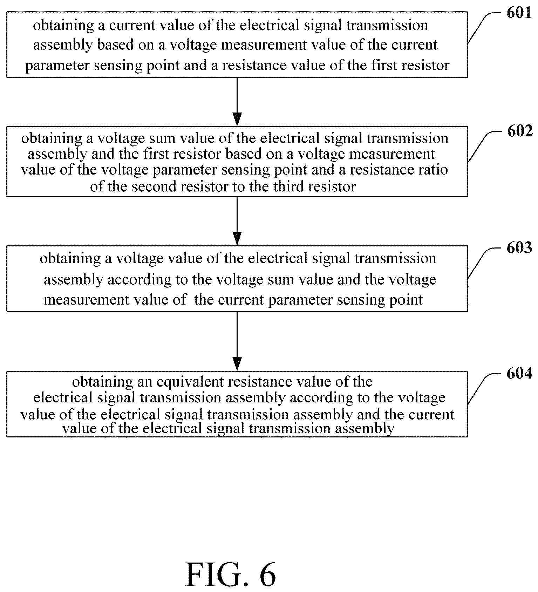

Fig. 6 is a schematic diagram of the process of the controller of an embodiment of the present application obtaining the equivalent resistance value of the electrical signal transmission assembly based on the received temperature sensing parameters. Referring to Fig. 6, the controller 101's obtaining the equivalent resistance value Re of the electrical signal transmission assembly 151 based on the measured values of the current parameter sensing point and the voltage parameter sensing point when the first transistor Q1 and the second transistor Q2 are turned on respectively includes the following steps: step 601, obtaining the current value Ie of the electrical signal transmission assembly 151 based on the voltage measurement value Test_V1 of the current parameter sensing point P2 and the resistance value of the first resistor R1, for example, Ie=Test_V1/R1. Step 602, obtaining the voltage sum V0 of the electrical signal transmission assembly 151 and the first resistor R1 based on the voltage measurement value Test_V2 of the voltage parameter sensing point P3 and the resistance ratio of the second resistor R2 and the third resistor R3, for example, V0 = Test_V2/[R3/(R2+R3)]. Step 603, obtaining the voltage value Ve of the electrical signal transmission assembly 151 according to the voltage sum value V0 and the voltage measurement value Test_V1 of the current parameter sensing point P2, for example, Ve = V0 - Test_V1; Step 604, obtaining the equivalent resistance value Re of the electrical signal transmission assembly 151 according to the voltage value Ve of the electrical signal transmission assembly 151 and the current value Ie of the electrical signal transmission assembly 151, for example, Re = Ve/Ie. When performing parameter calculation, the current value Ie can be calculated by, for example, sampling the periodic waveform value and then calculating the average value of the sampled values within the calculation period T to obtain Ie-eq. The sampling times are, for example, sampling when the first transistor Q1 and the second transistor Q2 are turned on respectively, for example, the sampling times are performed 2 times, 3 times, 4 times, etc. when the first transistor Q1 and the second transistor Q2 are turned on respectively, and then calculating the average value to obtain the equivalent value Ie-eq. The numerical value corresponding to the equivalent value Ie-eq can be drawn to form a straight line or curve 431 in Fig. 4D. Fig. 5 is a schematic diagram of the module composition of a controller according to an embodiment of the present application. Referring to Fig. 5 and Fig. 6, step 601, for example, is executed in the electromagnetic valve current detection module 501 of the controller 101. Step 602 and step 603, for example, are executed in the electromagnetic valve voltage detection module 502 of the controller 101. Step 604, for example, is executed in the electromagnetic valve equivalent resistance acquisition module 503 of the controller 101. Transmitting data and instructions between the various components of the controller 101 can be achieved. When performing parameter calculation, the controller 101 can also perform a corresponding parameter value analog-to-digital conversion or digital-to-analog conversion process.

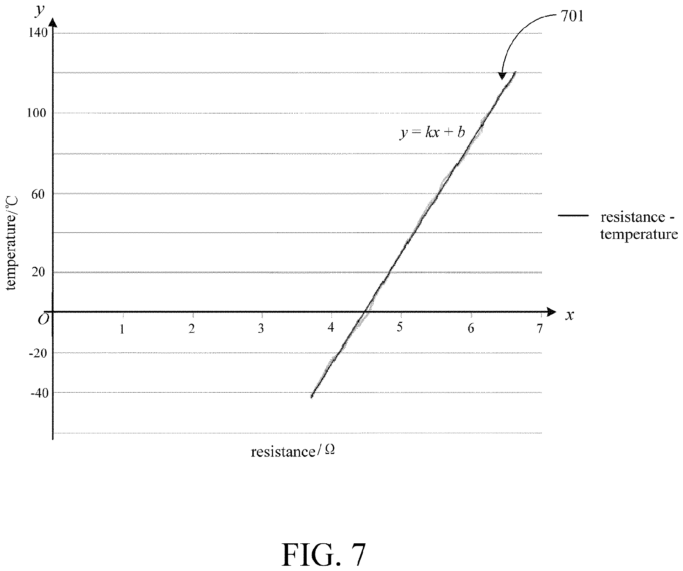

The controller 101 converting the temperature sensing value of the electric signal transmission assembly 151 based on the equivalent resistance value Re includes: converting and obtaining the temperature sensing value of the electrical signal transmission assembly151 according to the equivalent resistance value Re and the resistance-temperature calibration curve of the electrical signal transmission assembly 151 of the electromagnetic valve 122, performing this operation, for example, through the temperature value acquisition and filtering module 504 in Fig. 5. Fig. 7 is a schematic diagram of the resistance-temperature calibration curve of an embodiment of the present application. As shown in Fig.7, the horizontal axis of the coordinate system of the resistance-temperature calibration curve is resistance (in ohms/ Ω ), and the vertical axis is temperature (in degrees Celsius/°C). The process of obtaining the resistance-temperature calibration curve is as follows, for example, by placing the electromagnetic valve 122 in an adjustable temperature-variable box, adjusting the internal temperature of the temperature-variable box to different temperature values, and after a thermal equilibrium process, measuring the equivalent resistance value of the electrical signal transmission assembly 151 of the electromagnetic valve 122. After setting a plurality of different temperature values and measuring the corresponding different equivalent resistance values, it forms a temperature-resistance calibration table. Based on the temperature-resistance calibration table, the corresponding coordinate points are marked in the coordinate system, and then fitting and drawing the corresponding resistance-temperature calibration curve, for example, the curve 701 in Fig. 7 can be fitted to form a linear curve that can be approximately represented by the equation y=kx+b. The curve 701 may also be in other forms, such as a quadratic curve. The controller 101 may also perform a filtering operation on the temperature sensing value to improve the representation accuracy of the value, and the filtering method may be, for example, a sliding average filter. Performing the filtering operation, for example, by the temperature value acquisition and filtering module 504 of the controller 101 in Fig. 5.

The vehicle suspension control system of the present application realizes timely and accurate monitoring of the temperature of the electromagnetic valve while performing shock absorption control operations on the electromagnetic valve of the shock absorber, when the operating temperature of the electromagnetic valve exceeds a set threshold due to the vehicle running on a road with poor road conditions for a long time, the electromagnetic valve will stop operation to avoid damage and oil leakage caused by the electromagnetic valve running at high temperature for a long time, thereby protecting the shock absorber, avoiding affecting the overall performance of the shock absorber, and realizing intelligent control of the vehicle suspension.

The technical solution of the present application uses the electromagnetic valve as a load of the vehicle suspension control system and also as a temperature sensing device, so that the temperature of the electromagnetic valve can be monitored while the electromagnetic valve is performing a shock absorption control operation, without the need to set up an additional temperature sensor, thus saving the corresponding device cost and wiring process and additional system integration operations.

The basic concepts have been described above, obviously, for those skilled in the art, the above disclosure of the disclosure is only an example, and does not constitute a limitation to the present application. Although not expressly stated here, various modifications, improvements and amendments to this application may be made by those skilled in the art. Such modifications, improvements, and amendments are suggested in this application, so such modifications, improvements, and amendments still belong to the spirit and scope of the exemplary embodiments of this application.

Meanwhile, the present application uses specific words to describe the embodiments of the present application. For example, "one embodiment", "an embodiment", and/or "some embodiments" refer to a certain feature, structure or characteristic related to at least one embodiment of the present application. Therefore, it should be emphasized and noted that two or more references to "one embodiment" or "an embodiment" or "an alternative embodiment" in different places in this specification do not necessarily refer to the same embodiment. In addition, certain features, structures or characteristics of one or more embodiments of the present application may be properly combined.

Some aspects of the present application may be entirely implemented by hardware, may be entirely implemented by software (including firmware, resident software, microcode, etc.), or may be implemented by a combination of hardware and software. The above hardware or software may be referred to as "block", "module", "engine", "unit", "component" or "system". The processor can be one or more Application Specific Integrated Circuits (ASIC), Digital Signal Processors (DSPs), Digital Signal Processing Devices (DAPDs), Programmable Logic Devices (PLDs), Field Programmable Gate Arrays (FPGAs), a processor, a controller, a microcontroller, a microprocessor, or a combination thereof. Additionally, aspects of the present application may be embodied as a computer product comprising computer readable program code on one or more computer readable media. For example, computer-readable media may include, but are not limited to, magnetic storage devices (e.g., hard disks, floppy disks, magnetic tape...), optical disks (e.g., compact disk CDs, digital versatile disks DVD...), smart cards, and flash memory devices (e.g., cards, sticks, key drives...).

In the same way, it should be noted that in order to simplify the expression disclosed in the present application and help the understanding of one or more embodiments of the disclosure, in the foregoing description of the embodiments of the present application, sometimes multiple features are combined into one embodiment, drawings or descriptions thereof. However, this method of disclosure does not imply that the subject matter of the application requires more features than are recited in the claims. Indeed, embodiment features are less than all features of a single foregoing disclosed embodiment.

Although the present application has been described with reference to the current specific embodiments, those of ordinary skill in the art should recognize that the above embodiments are only used to illustrate the present application, and various equivalent changes or substitutions can also be made without departing from the spirit of the present application, therefore, as long as the changes and modifications to the above-mentioned embodiments are within the spirit of the present application, they will all fall within the scope of the claims of the present application.

## Claims

1. A vehicle suspension control system, **characterized by** comprising:
a controller, providing a control signal;
a shock absorber, including a hydraulic module and an electromagnetic valve, wherein, part or all of an oil supply passage of the hydraulic module passes through the electromagnetic valve; wherein the electromagnetic valve includes an electrical signal transmission assembly and an oil passage opening control assembly, and the electrical signal transmission assembly of the electromagnetic valve adjusts the oil passage opening control assembly of the electromagnetic valve based on the control signal, therefor controlling oil supply of the hydraulic module;
an electromagnetic valve control and temperature sensing circuit, controlling an operation of the electromagnetic valve, sensing a temperature of the electrical signal transmission assembly of the electromagnetic valve, and transmitting temperature sensing parameters to the controller;
wherein the controller is configured as: when detecting temperature of the electrical signal transmission assembly of the electromagnetic valve exceeding a first temperature threshold, sending a corresponding control signal to stop the operation of the electromagnetic valve.

2. The vehicle suspension control system according to claim 1, **characterized in that**, the electromagnetic valve controlling and temperature sensing circuit including a switch circuit module, a current sensing module and a voltage sensing module;
wherein the switch circuit module includes a first transistor and a second transistor, an electrical signal transmission assembly first end connecting to a connection point of the first transistor and the second transistor, the current sensing module including a first resistor connecting in series with the electrical signal transmission assembly, and the voltage sensing module including a resistor string formed by a second resistor and a third resistor, a resistor string first end and a resistor string second end are respectively connecting to the electrical signal transmission assembly first end and a first resistor second end;
a connection point between the first resistor and the electrical signal transmission assembly connecting to the controller as a current parameter sensing point of the electrical signal transmission assembly, and a connection point between the second resistor and the third resistor connecting to the controller as a voltage parameter sensing point of the electrical signal transmission assembly;
wherein, the controller is configured to obtain an equivalent resistance value of the electrical signal transmission assembly based on measurement values of the current parameter sensing point and the voltage parameter sensing point when the first transistor and the second transistor are respectively opening, and to obtain a temperature sensing value of the electrical signal transmission assembly based on converting the equivalent resistance value.

3. The vehicle suspension control system according to claim 2, **characterized in that**, the switch circuit module turns on and off the first transistor and the second transistor based on a receiving control signal to control the operation of the electromagnetic valve.

4. The vehicle suspension control system according to claim 2, **characterized in that**, the controller obtaining the equivalent resistance value of the electrical signal transmission assembly based on the measurement values of the current parameter sensing point and the voltage parameter sensing point when the first transistor and the second transistor are respectively opening comprises:
obtaining a current value of the electrical signal transmission assembly based on a voltage measurement value of the current parameter sensing point and a resistance value of the first resistor;
obtaining a voltage sum value of the electrical signal transmission assembly and the first resistor based on a voltage measurement value of the voltage parameter sensing point and a resistance ratio of the second resistor to the third resistor;
obtaining a voltage value of the electrical signal transmission assembly according to the voltage sum value and the voltage measurement value of the current parameter sensing point;
obtaining an equivalent resistance value of the electrical signal transmission assembly according to the voltage value of the electrical signal transmission assembly voltage value and the current value of the electrical signal transmission assembly.

5. The vehicle suspension control system according to claim 2, **characterized in that**, obtaining the temperature sensing value of the electrical signal transmission assembly based on converting the equivalent resistance value comprises:
converting to obtain the temperature sensing value of the electrical signal transmission assembly according to the equivalent resistance value and a resistance-temperature calibration curve of the electrical signal transmission assembly.

6. The vehicle suspension control system according to claim 2, **characterized in that**, the electromagnetic valve control and temperature sensing circuit further includes a control signal driving module, and the control signal transmits to the switch circuit module via the control signal driving module.

7. The vehicle suspension control system according to claim 2, **characterized in that**, the electromagnetic valve control and temperature sensing circuit further includes a signal amplification module, and the measurement values of the current parameter sensing point and the voltage parameter sensing point when the first transistor and the second transistor are respectively opening transmits to the controller through the signal amplification module.

8. The vehicle suspension control system according to claim 2, **characterized in that**, the controller performs a filtering operation on the temperature sensing value.

9. The vehicle suspension control system according to claim 8, **characterized in that**, a method of the filtering includes sliding average filtering.

10. The vehicle suspension control system according to claim 1, **characterized in that**, a periphery of the shock absorber provides an air spring module, the air spring module providing a corresponding air pump and a gas distribution valve, wherein the air pump and the gas distribution valve control an air intake of the air spring module according to a control operation of the controller.
